# EUROPÄISCHE PATENTSCHRIFT

(11) **EP 0 384 165 B1**
(45) Veröffentlichungstag und Bekanntmachung des Hinweises auf die Patenterteilung: **05.01.1994**
(21) Anmeldenummer: 90101785.5
(22) Anmeldetag: 30.01.1990
(51) Int. Cl.: C08J 3/03, B29B 7/38

(54) **Kontinuierliches Verfahren zur Herstellung wässriger nicht selbstemulgierender Polymerdispersionen**
Continuous method for making non-self-emulsifying polymer dispersions
Procédé continu pour la fabrication de dispersions aqueuses de polymères non auto-émulsionnantes

(30) Priorität: 18.02.1989 DE 3905007
(43) Veröffentlichungstag der Anmeldung: 29.08.1990
(73) Patentinhaber: BASF Aktiengesellschaft, 67063 Ludwigshafen (DE)
(72) Erfinder: Goffing, Friedrich, Dr., D-6710 Frankenthal (DE); Kroker, Joerg, Dr., D-6730 Neustadt (DE); Nachtrab, Rainer, D-6700 Ludwigshafen (DE); Thielle, Heino, Dr., D-6700 Ludwigshafen (DE)

(56) Entgegenhaltungen:
- EP-A- 0 255 667
- GB-A- 1 414 930
- US-A- 4 014 524
- US-A- 4 320 041
- US-A- 4 409 288
- US-A- 4 742 095

## Beschreibung

Die Erfindung betrifft ein kontinuierliches Verfahren zur Herstellung wäßriger nicht selbstemulgierender Polymerdispersionen - im weiteren Dispersionen genannt - mit kleinen Teilchen und hoher Lagerstabilität auf Basis hochviskoser Reaktionsharze ohne Zusatz von Lösungsmitteln mittels einer intensiv dispergierenden Schneckenmaschine.

Als Reaktionsharze werden nicht selbstemulgierende Systeme eingesetzt. Solche sind beispielsweise Polyurethane, Polyharnstoffe, Cyanatharze, Epoxide, Epoxiester, Vinylester, gesättigte Polyester, ungesättigte Polyester, Bismaleinimide, Polykondensationsharze, wie beispielsweise Melamin- und Phenolharze oder Kombinationen dieser Harze, die gemischt werden mit einer ausreichenden Menge geeigneter Emulgatoren wie beispielsweise Polyole, Glykolether, ethoxylierte Alkylphenole, Polyethylenoxide oder sonstigen für diese Anwendung üblichen Emulgatoren.

Unter hochviskosen Reaktionsharzen werden solche mit einer Anfangsviskosität größer 100 Pas bei 45°C verstanden.

Solche Dispersionen finden Anwendung bei der Beschichtung und Imprägnierung von Textilien, Leder, Papier, Holz, Metall, Keramik, Glas oder Porzellan und bei der Beschlichtung von Verstärkungsfasern wie Kohlenstoff-Fasern, Glas-Fasern, Keramik-Fasern, Naturfasern und Kunstfasern.

Verfahren zur Herstellung von wäßrigen nicht selbstemulgierenden Dispersionen aus Reaktionsharz sind nur im niederviskosen Bereich bekannt. Im hochviskosen Bereich gibt es kein Verfahren zur Herstellung feinteiliger, lagerstabiler Dispersionen aus Reaktionsharzen.

Die am häufigsten angewandten Verfahren zur Herstellung von Dispersionen aus Reaktionsharzen im niederviskosen Bereich sind diskontinuierliche Verfahren in Behältern, Rührkesseln oder Dissolvern. Ein hierfür geeigneter Dissolver wird in der EP 0112619 beschrieben. Bei solchen Batch-Verfahren wird in der Regel das niederviskose Harz vorgelegt und unter Wasserzugabe mit einem Rührer oder einer Dissolverscheibe dispergiert. Es ist bekannt, daß solche Rührer oder Dissolver nur im niederviskosen Bereich zum Dispergieren eingesetzt werden können; denn bei hochviskosen Reaktionsharzen kommt es zu einer laminaren Strömung um das Rührorgan, so daß die Dispergierwirkung stark abnimmt.

Weitere Nachteile, die mit dem Batchprozeß einhergehen, sind die großen Apparateabmessungen, damit große Produktmengen und hieraus resultierende große Verweilzeiten. Außerdem sind die einzelnen Batches nur mit den üblichen Qualitätsschwankungen herstellbar.

Auch im kontinuierlichen Bereich sind Verfahren zur Herstellung von wäßrigen nicht selbstemulgierenden Dispersionen nur im niederviskosen Bereich bekannt. Solche Verfahren sind beispielsweise in der US-4 742 095 und der GB-1 414 930 beschrieben. Diese Verfahren sind jedoch aufgrund der verwendeten Dispergiervorrichtungen nicht im hochviskosen Bereich einsetzbar.

Desweiteren wird in der Literatur beschrieben, daß mit zunehmender Viskosität des Reaktionsharzes aufgrund der mangelnden Dispergierwirkung der bekannten Verfahren im hochviskosen Bereich die mittlere Teilchengröße der Dispersion zunimmt. Yoshiyuki Iwase beschreibt in Journal of Elastomers und Plastics, Vol. 12, Seite 45 ff, daß Reaktionsharze mit Viskositäten ab 10 Pas schlechter und ab 100 Pas praktisch nicht dispergierbar sind.

Neben der Tatsache, daß diese bekannten Verfahren wegen ihrer ungeeigneten Dispergiervorrichtungen im hochviskosen Bereich nicht einsetzbar sind, schließt noch zusätzlich eine nicht vorhandene effektive Temperaturführung ihren Einsatz im hochviskosen Bereich aus. Bei der Dispergierung von sehr hochviskosen Reaktionsharzen zu feinteiligen lagerstabilen Dispersionen tritt eine hohe Energiedissipation auf, die zu einer starken Erwärmung des Produkts führt. Falls diese Wärme der Dispersion nicht sehr schnell entzogen wird, führt dies zur Koagulation und damit zu einer geringen Lagerstabilität.

Sowohl bei den bekannten Batch- als auch bei den kontinuierlichen Verfahren ist eine für den hochviskosen Bereich notwendige effektive Kühlung nicht vorhanden.

Die Herstellung von feinteiligen lagerstabilen Dispersionen aus hochviskosen Reaktionsharzen erfolgt nach dem Stand der Technik durch Verdünnen mit Lösungsmittel, wie in der DE-PS 3 233 230 oder der US-PS 4 409 288 beschrieben. Gebräuchliche Lösungsmittel sind Aceton, Xylol, Ethoxyethylenglykol, usw. Der Einsatz dieser Lösungsmittel ist jedoch mit folgenden Nachteilen verbunden:
- Aufgrund ihrer Toxizität und Brennbarkeit müssen diese Lösungsmittel wieder vollständig - meist destillativ - aus der fertigen Dispersion entfernt werden.
   Dies ist zeit- und kostenintensiv und aufgrund von auftretendem stabilem Schaum bei der Entgasung der fertigen Dispersion schwierig. Außerdem tritt durch die thermische Belastung während der Destillation eine Verringerung der Lagerstabilität auf.
- Eine Absenkung der Viskosität während des Dispergierens im hochviskosen Bereich mit geeigneten Dispergierorganen bedeutet eine Teilchenvergrößerung und damit eine Verminderung der Lagerstabilität der fertigen Dispersion.

Es ist bekannt, daß mit zunehmendem Energieeintrag die mittlere Teilchengröße verkleinert wird; vorausgesetzt man besitzt ein geeignetes Dispergierverfahren mit dem dieser Energieeintrag realisiert werden kann. Die eingebrachte Energie steigt aber im hochviskosen Bereich mit zunehmender Viskosität. Das bedeutet, daß der Zusatz von Lösungsmittel mit einer Vergrößerung des mittleren Teilchendurchmessers verbunden ist und damit zu einer geringeren Lagerstabilität führt.

Neben den geschilderten qualitativen Nachteilen, die mit der Herstellung von Dispersionen aus niederviskosen Reaktionsharzen verbunden sind, gibt es noch logistische.

Die Dispersionen werden meist an einem Ort hergestellt, der von dem der Verarbeitung verschieden ist. Um Transportkosten zu sparen, wäre es wirtschaftlich, nur Dispersionskonzentrate zu transportieren und diese am Einsatzort mit Wasser auf ihre jeweilige anwendungstechnische Konzentration zu verdünnen.

Da die Dispersionskonzentrate sehr hochviskos sind - am Phaseninversionspunkt mit dem geringsten theoretischen Wasseranteil mit maximaler Viskosität - ist ihre Herstellung nach dem Stand der Technik in feinteiliger Form mit hoher Lagerstabilität nicht möglich.

Aufgrund der dargelegten Mängel stellte sich daher die Aufgabe, ein kontinuierliches Verfahren zur Herstellung wäßriger nicht selbstemulgierender Polymerdispersionen mit kleinen Teilchen und hohen Lagerstabilitäten auf Basis hochviskoser Reaktionsharze ohne Zusatz von Lösungsmitteln bereitzustellen.

Diese Aufgabe wird erfindungsgemäß dadurch gelöst, daß die Herstellung der Polymerdispersionen in einem intensivscherteil der Schneckenmaschine durchgeführt wird, wobei in diesem intensivscherteil das Wasser-/Reaktionsharz-Verhältnis im Phaseninversionspunkt oder nahe daran liegt, und

| | |
|---|---|
| - der spezifische Energieeintrag | 0,01 - 0,15 kWh/kg |
| - die Verweilzeit | 0,1 - 60 sec und |
| - das Schergefälle | 2000 - 20 000 sec⁻¹ |

beträgt.

Weitere Merkmale des erfindungsgemäßen Verfahrens sind Gegenstand der Unteransprüche.

Der Phaseninversionspunkt kennzeichnet dasjenige Verhältnis Wasser/Öl, bei welchem die Wasser-in-Öl-Emulsion in eine Öl-in-Wasser-Emulsion übergeht.

Durch die Fahrweise im oder in der Nähe des Phaseninversionspunktes wird die maximale Viskosität erreicht. Dies führt zu einem maximalen Energieeintrag und damit zu kleinstmöglichen Teilchendurchmessern.

Da jedoch aufgrund der hohen Viskosität eine starke Energiedissipation während des Dispergiervorganges auftritt, muß, falls die Koagulationstemperatur überschritten wird, unmittelbar danach durch Zusatz von weiterem kalten Wasser in einem anschließenden zweiten Intensivscherteil der Schneckenmaschine eine Koagulation der Teilchen verhindert werden.

Die Koagulationstemperatur wird dadurch bestimmt, daß die lagerstabile Dispersion bei Erreichen der Koagulationstemperatur koaguliert und nicht mehr lagerstabil bleibt.

Durch die Dispersionsherstellung im oder in der Nähe des Phaseninversionspunktes und - falls erforderlich - die anschließende Kühlung durch zusätzliches Wasser entsteht eine Dispersion mit sehr kleinen Teilchen und hoher Lagerstabilität.

Eine für das Verfahren gemäß der vorliegenden Erfindung vorteilhaft verwendbare Vorrichtung zeigt das Verfahrensfließbild.

Das hochviskose Reaktionsharz RH zusammen mit dem Emulgator wird in einem beheizbaren Kessel 1 bevorratet. Die Temperatur des Harzes wird so eingestellt, daß es fließfähig ist und mit der Zahnradpumpe 3 angesaugt und gefördert werden kann. Zwischen Kessel 1 und Zahnradpumpe ist ein beheiztes Absperrventil 2 angebracht. Die Rohrleitung 4 für das Harz zwischen Kessel 1 und der Schneckenmaschine 9 ist beheizbar.

Das Wasser W wird in einem gekühlten Kessel 5 bevorratet. Aus Qualitätsgründen für die spätere Dispersion ist es günstig, die Temperatur bis auf nahe 0°C abzusenken. Eine Erklärung für diesen Sachverhalt erfolgt später. Das Ventil 6 dient zum Absperren des Kessels 5. Mit einer Kolbenpumpe 7 wird das Wasser über eine Rohrleitung 8 in die Schneckenmaschine 9 dosiert. Bei einer langen Rohrleitung 8 sollte diese gekühlt werden, um eine Erwärmung des Wassers zu vermeiden.

Als intensiv dispergierende Schneckenmaschine 9 kann eine hochtourig drehende Ein-Schneckenmaschine, die von einem Elektromotor 10 angetrieben wird, verwendet werden.

Die Schneckenmaschine wird gekühlt. Aus Qualitätsgründen der Dispersion ist es zweckmäßig, die Schneckenmaschine so tief wie möglich zu kühlen.

Im ersten Teil 11 der Schneckenmaschine wird über die Gehäusebohrung 17 das hochviskose Reaktionsharz und über die Gehäusebohrung 16 ein Teil des Wassers zugegeben. Dieser Teil der Schneckenmaschine ist mit Schneckenteilen bestückt, die das Reaktionsharz in die eigentliche Dispergierzone 12 transportieren. Die Dispergierung in der Dispergierzone 12 wird so durchgeführt, daß das Wasser/Harz-Verhältnis im Phaseninversionspunkt oder möglichst in der Nähe davon liegt. Mit dieser Fahrweise wird sichergestellt, daß bei der maximal auftretenden Viskosität der Dispersion dispergiert wird. Dies hat einen minimalen mittleren Teilchendurchmesser zur Folge.

Da aufgrund der hohen Viskosität eine starke Energiedissipation in der Dispergierzone 12 auftritt, wird die Schneckenmaschine gekühlt und falls die Koagulationstemperatur überschritten wird, wird unmittelbar danach in der Verdünnungszone 14 weiteres kaltes Wasser zugegeben, um eine Koagulation der Teilchen zu verhindern. Hierdurch entsteht eine Dispersion mit kleinen Teilchen und sehr hoher Lagerstabilität.

Ist keine Temperaturabsenkung nach der Dispergierzone 12 aufgrund ausreichender Lagerstabilität notwendig, braucht kein weiteres Wasser zugegeben werden.

Nun wird auch der Grund klar, weshalb der Kessel 5 mit Wasser auf nahe 0°C gekühlt wird. Die Reaktionsharztemperatur soll im Kessel 1 deshalb auch nur gerade so hoch sein, daß das Reaktionsharz eben noch fließfähig ist.

Da die spezifische Wärmekapazität von Wasser ca. um den Faktor 2 bis 3 höher liegt als die des Reaktionsharzes, tritt bei der Dispergierung eine unterstützende Wirkung bezüglich der Temperaturbegrenzung auf. Außerdem werden die Schneckenmaschine 9 und insbesondere die Dispergierzone 12 gekühlt.

Neben diesen Kühleffekten sind jedoch Verweilzeiten und Schergefälle in der Dispergierzone 12 von großer Bedeutung für den resultierenden Temperaturanstieg.

Die Dispergierzone 12 muß als intensiv dispergierende Mischzone mit hohen Schergefällen aufgebaut sein, damit wird die benötigte Dispergierzeit minimiert, die Temperatureinwirkung auf die Dispersion bleibt kurz und es kommt zu keiner Produktschädigung.

Die Dispergierzone 12 muß so gestaltet werden, daß ein spezifischer Energieeintrag von 0.01 kWh/kg bis 0,15 kWh/kg, ein Schergefälle von 2000 sec⁻¹ bis 20 000 sec⁻¹ und eine Verweilzeit von 0,1 sec bis 60 sec auftritt. Größere spezifische Energien und höhere Verweilzeiten führen durch übermäßige thermische Belastungen zu einer qualitativen Schädigung der Dispersion.

Vorteilhaft können Rotor/Stator-Systeme mit engen Spaltweiten verwendet werden.

Mit den Schneckenteilen 13 wird die Dispersionspaste von der Dispergierzone 12 zur Verdünnungszone 14 transportiert.

Das zusätzliche Wasser wird mittels der Kolbenpumpe 7a durch eine weitere Gehäusebohrung 18 in die Verdünnungszone 14 eingebracht.

Da die Dispersion hier bereits fertig ist und es sich nur noch um einen Verdünnungsschritt handelt, braucht zur Vermischung kein hoher spezifischer Energieeintrag mehr zu erfolgen. Vorteilhaft können Rotor/Stator-Systeme verwendet werden, die größere Spaltweiten besitzen und die damit etwa im Schergefälle und im spezifischen Energieeintrag um den Faktor 2 und mehr niedriger liegen als in der Dispergierzone 12.

Dies ist vorteilhaft, da hierdurch eine starke Erwärmung vermieden wird. In dem Verdünnungsteil 14 kann noch an weiteren Stellen Wasser, beispielsweise über weitere Pumpen, zugegeben werden.

Für den Fall, daß ein Dispersionskonzentrat mit hohem Feststoffgehalt gewünscht wird, wird kein oder nur soviel Wasser zugegeben, daß die Koagulationstemperatur nicht überschritten wird.

Nach der Verdünnungszone 14 wird eine Polymerdispersion PD mit weiteren Schneckenteilen 15 ausgetragen. Nach dem beanspruchten Verfahren werden hochkonzentrierte Polymerdispersionen mit Feststoffgehalten die der Feststoffkonzentration im Phaseninversionspunkt entsprechen, enthalten.

### Beispiel 1

Eine Harzzubereitung, bestehend aus 85 % Epoxidharz und 15 % Emulgator (Pluronic F108®; BASF Corporation) mit einer Viskosität von 250 Pas bei 50°C wird mit einer Zahnradpumpe mit einem Massenstrom von 32,5 kg/h in die erste Dispergierzone der Schneckenmaschine dosiert. Um eine ausreichende Fließfähigkeit der Harzzubereitung zu erreichen, wird diese im Kessel auf 65°C erhitzt.

In einem zweiten Kessel wird Wasser mit einer Temperatur von 1°C mittels einer Kolbenpumpe mit einem Massenstrom von 8,1 kg/h in die erste Dispergierzone der Schneckenmaschine eindosiert.

Als Schneckenmaschine wird eine hochtourig drehende Einschneckenmaschine eingesetzt. Die Gehäuse der Schneckenmaschine werden gekühlt. Die Drehzahl beträgt 900 min⁻¹.

Das Wasser-/Epoxidharz-Verhältnis liegt bei 0,29 und damit nahe beim Phaseninversionspunkt.

In der Schneckenmaschine wird in der ersten Dispergierstufe ein Rotor/Stator-System mit einer Spaltweite von 0,5 mm eingesetzt. Das Schergefälle beträgt 5000 sec⁻¹, die Verweilzeit 10 sec und der spezifische Energieeintrag 0,05 kWh/kg.

In der Verdünnungsstufe wird ein weiterer Wassermassenstrom von 14,2 kg/h mit einer Temperatur von 1°C zugegeben.

Man erhält eine Dispersion mit 90 % der dispergierten Teilchen kleiner 1,0 µm.

Die Dispersion ist gekennzeichnet durch eine sehr gute mechanische, gravimetrische und volumetrische Stabilität.

### Beispiel 2

Eine Harzzubereitung, bestehend aus 85 % Epoxidharz und 15 % Emulgator (Pluronic F108®; BASF Corporation) mit einer Viskosität von 100 Pas bei 50°C wird mit einer Zahnradpumpe mit einem Massenstrom von 108,4 kg/h in die erste Dispergierzone der Schneckenmaschine dosiert. Um eine ausreichende Fließfähigkeit der Harzzubereitung zu erreichen, wird diese im Kessel auf 65°C erhitzt.

In einem zweiten Kessel wird Wasser mit einer Temperatur von 1°C mittels einer Kolbenpumpe mit einem Massenstrom von 27,0 kg/h in die erste Dispergierzone der Schneckenmaschine eindosiert.

Als Schneckenmaschine wird eine hochtourig drehende Einschneckenmaschine eingesetzt. Die Gehäuse der Schneckenmaschine werden gekühlt. Die Drehzahl beträgt 3500 min⁻¹.

Das Wasser-/Epoxidharz-Verhältnis liegt bei 0,29 und damit nahe beim Phaseninversionspunkt.

In der Schneckenmaschine wird in der ersten Dispergierstufe ein Rotor/Stator-System mit einer Spaltweite von 0,5 mm eingesetzt. Das Schergefälle beträgt 20000 sec⁻¹, die Verweilzeit 3 sec und der spezifische Energieeintrag 0,10 kWh/kg.

In der Verdünnungsstufe wird ein weiterer Wassermassenstrom von 70,0 kg/h mit einer Temperatur von 1°C zugegeben.

Man erhält eine Dispersion mit 90 % der dispergierten Teilchen kleiner 0,7 µm.

Die Dispersion ist gekennzeichnet durch eine sehr gute mechanische, gravimetrische und volumetrische Stabilität.

### Beispiel 3

Eine Harzzubereitung, bestehend aus 85 % Epoxidharz und 15 % Emulgator (Pluronic F108®; BASF Corporation) mit einer Viskosität von 825 Pas bei 50°C wird mit einer Zahnradpumpe mit einem Massenstrom von 6,1 kg/h in die erste Dispergierzone der Schneckenmaschine dosiert. Um eine ausreichende Fließfähigkeit der Harzzubereitung zu erreichen, wird diese im Kessel auf 65°C erhitzt.

In einem zweiten Kessel wird Wasser mit einer Temperatur von 1°C mittels einer Kolbenpumpe mit einem Massenstrom von 1,5 kg/h in die erste Dispergierzone der Schneckenmaschine eindosiert.

Als Schneckenmaschine wird eine hochtourig drehende Einschneckenmaschine eingesetzt. Die Gehäuse der Schneckenmaschine werden gekühlt. Die Drehzahl beträgt 350 min⁻¹.

Das Wasser-/Epoxidharz-Verhältnis liegt bei 0,29 und damit nahe beim Phaseninversionspunkt.

In der Schneckenmaschine wird in der ersten Dispergierstufe ein Rotor/Stator-System mit einer Spaltweite von 0,5 mm eingesetzt. Das Schergefälle beträgt 2000 sec⁻¹, die Verweilzeit 53 sec und der spezifische Energieeintrag 0,15 kWh/kg.

In der Verdünnungsstufe wird ein weiterer Wassermassenstrom von 7,1 kg/h mit einer Temperatur von 1°C zugegeben.

Man erhält eine Dispersion mit 90 % der dispergierten Teilchen kleiner 0,8 µm.

Die Dispersion ist gekennzeichnet durch eine sehr gute mechanische, gravimetrische und volumetrische Stabilität.

### Beispiel 4

Eine Harzzubereitung, bestehend aus 85 % Epoxidharz und 15 % Emulgator (Pluronic F108®; BASF Corporation) mit einer Viskosität von 400 Pas bei 50°C wird mit einer Zahnradpumpe mit einem Massenstrom von 361 kg/h in die erste Dispergierzone der Schneckenmaschine dosiert. Um eine ausreichende Fließfähigkeit der Harzzubereitung zu erreichen, wird diese im Kessel auf 65°C erhitzt.

In einem zweiten Kessel wird Wasser mit einer Temperatur von 1°C mittels einer Kolbenpumpe mit einem Massenstrom von 90,1 kg/h in die erste Dispergierzone der Schneckenmaschine eindosiert.

Als Schneckenmaschine wird eine hochtourig drehende Einschneckenmaschine eingesetzt. Die Gehäuse der Schneckenmaschine werden gekühlt. Die Drehzahl beträgt 1800 min⁻¹.

Das Wasser-/Epoxidharz-Verhältnis liegt bei 0,29 und damit nahe beim Phaseninversionspunkt.

In der Schneckenmaschine wird in der ersten Dispergierstufe ein Rotor/Stator-System mit einer Spaltweite von 0,5 mm eingesetzt. Das Schergefälle beträgt 10000 sec⁻¹, die Verweilzeit 0,3 sec und der spezifische Energieeintrag 0,01 kWh/kg.

Es wird kein weiterer Wassermassenstrom zugegeben.

Man erhält eine Dispersion mit 90 % der dispergierten Teilchen kleiner 1,4 µm.

Die Dispersion ist gekennzeichnet durch eine sehr gute mechanische, gravimetrische und volumetrische Stabilität.

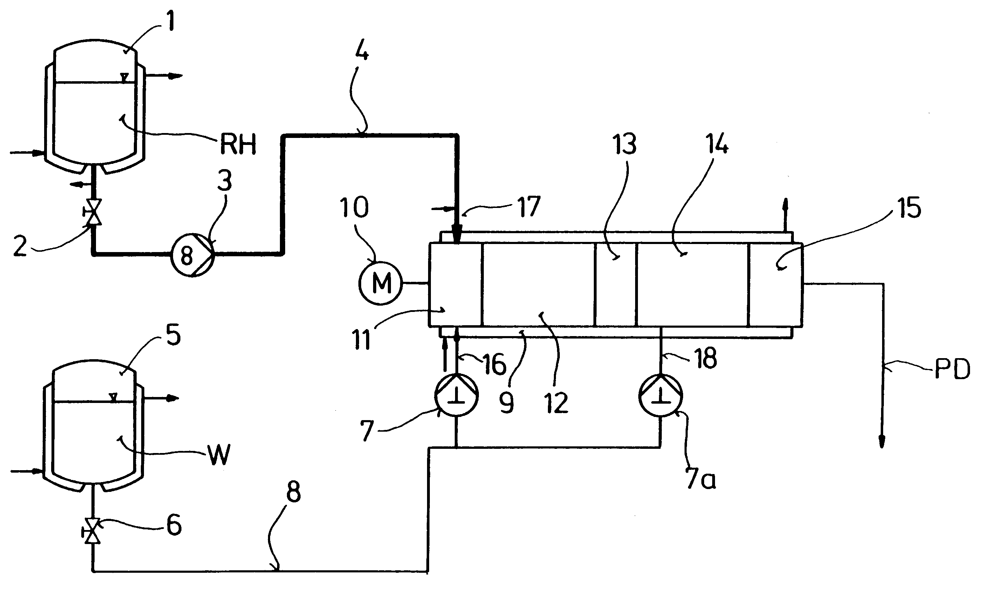

## Patentansprüche

1. Kontinuierliches Verfahren zur Herstellung wäßriger nicht selbstemulgierender Polymerdispersionen mit kleinen Teilchen und hoher Lagerstabilität auf Basis hochviskoser Reaktionsharze mit einer Anfangsviskosität größer als 100 Pa.s bei 45°C ohne Zusatz von Lösungsmitteln mittels einer intensiv dispergierenden Schneckenmaschine, dadurch gekennzeichnet, daß die Herstellung der Polymerdispersionen in einem Intensivscherteil der Schneckenmaschine durchgeführt wird, wobei in diesem Intensivscherteil das Wasser-/Reaktionsharz-Verhältnis im Phaseninversionspunkt oder nahe daran liegt, und
| | |
|---|---|
| - der spezifische Energieeintrag | 0,01 - 0,15 kWh/kg |
| - die Verweilzeit | 0,1 - 60 sec und |
| - das Schergefälle | 2000 - 20 000 sec⁻¹ |
beträgt.

2. Verfahren nach Anspruch 1, dadurch gekennzeichnet, daß bei zu hoher Temperatur nach dem Intensivscherteil in einem anschließenden zweiten Intensivscherteil mit wesentlich geringerem spezifischen Energieeintrag zusätzlich Wasser zu der Dispersionspaste derart zugegeben wird, daß die Koagulationstemperatur der Polymerdispersion nach Verlassen des zweiten Intensivscherteils nicht überschritten wird.

3. Verfahren nach Anspruch 1, dadurch gekennzeichnet, daß an weiteren Stellen stromabwärts in der Schneckenmaschine zusätzlich Wasser zugegeben werden kann.

4. Verfahren nach Anspruch 1, dadurch gekennzeichnet, daß hochkonzentrierte Polymerdispersionen mit Feststoffgehalten hergestellt werden können, bei denen die Feststoffkonzentration der Feststoffkonzentration im Phaseninversionspunkt entspricht.

## Claims

1. A continuous process for the preparation of an aqueous non-self-emulsifying polymer dispersion having small particles and a long shelf life and based on a highly viscous reaction resin having an initial viscosity greater than 100 Pa.s at 45°C, without the addition of solvents, by means of an intensively dispersing screw apparatus, wherein the preparation of the polymer dispersion is carried out in an intensive shear zone of the screw apparatus, the water/reaction resin ratio in this intensive shear zone corresponding to the phase inversion point or being close to it, and
the scientific energy supply is 0.01-0.15 kWh/kg,
the residence time is 0.1-60 sec and
the shear gradient is 2,000-20,000 sec⁻¹.

2. A process as claimed in claim 1, wherein, if the temperature is too high after the intensive shear zone, water is additionally introduced into the dispersion paste in a downstream second intensive shear zone having a substantially lower specific energy supply, in such a way that the coagulation temperature of the polymer dispersion is not exceeded after the said dispersion leaves the second intensive shear zone.

3. A process as claimed in claim 1, wherein further water may be introduced into the screw apparatus at other points downstream.

4. A process as claimed in claim 1, wherein it is possible to prepare a highly concentrated polymer dispersion in which the solids concentration corresponds to the solids concentration at the phase inversion point.

## Revendications

1. Procédé continu de préparations de dispersions de polymères aqueuses, non auto-émulsionnantes à petites particules et stabilité au stockage élevée, à base de résines de réaction à haute viscosité, de viscosité initiale supérieure à 100 Pa.s à 45°C, sans addition de solvants au moyen d'une machine à vis sans fin à pouvoir dispersant intensif, caractérisé par le fait que la préparation des dispersions polymères est effectuée dans une partie à cisaillement intense de la machine à vis sans fin, le rapport eau/résine de réaction étant situé, dans cette partie à cisaillement intense, au point d'inversion de phases ou au voisinage de celui-ci, et
- l'apport spécifique d'énergie est 0,01-0,15 kwh/kg
- le temps de séjour est 0,1-60 s et
- le gradient de cisaillement est 2000-20000 s⁻¹

2. Procédé selon la revendication 1, caractérisé par le fait que, lors d'une température trop élevée après la partie à cisaillement intensif, de l'eau supplémentaire est ajoutée à la pâte de dispersion dans une seconde partie à cisaillement intensif, à apport spécifique d'énergie sensiblement plus faible de façon que la température de coagulation de la dispersion de polymère ne soit pas dépassée après avoir quitté la seconde partie à cisaillement intensif.

3. Procédé selon la revendication 1, caractérisé par le fait que de l'eau additionnelle peut être ajoutée à d'autres zones en aval dans la machine à vis.

4. Procédé selon la revendication 1, caractérisé par le fait que peuvent être préparées des dispersions de polymères fortement concentrées à teneur en produits solides, dans lesquelles la concentration en produits solides correspond à la concentration en produits solides au point d'inversion de phases.
